# EUROPEAN PATENT SPECIFICATION

(11) **EP 2 614 979 B1**
(45) Date of publication and mention of the grant of the patent: **30.12.2015**
(21) Application number: 11823448.3
(22) Date of filing: 31.08.2011
(51) Int. Cl.: B60K 7/00, B60K 1/00, B60K 1/04, B60K 6/40, B60L 3/00, B60L 9/18, B60L 11/18

(54) **IN-WHEEL MOTOR ELECTRIC VEHICLE**
ELEKTROFAHRZEUG MIT RADINTERNEM MOTOR
VÉHICULE ÉLECTRIQUE À MOTEUR DANS LA ROUE

(30) Priority: 07.09.2010 JP 2010199881
(43) Date of publication of application: 17.07.2013
(73) Proprietor: NTN Corporation, Osaka-shi, Osaka 550-0003 (JP)
(72) Inventor: AKAMATSU, Yoshinobu, Iwata-shi Shizuoka 438-0037 (JP)
(74) Representative: Maikowski & Ninnemann
(86) International application number: PCT/JP2011/069681
(87) International publication number: WO 2012/032972

(56) References cited:
- EP-A2- 1 466 774
- WO-A2-2008/031080
- JP-A- 2005 323 455
- JP-A- 2008 213 774
- JP-A- 2009 142 036
- JP-A- 2009 286 287
- JP-A- 2010 036 902
- JP-A- 2010 064 723
- JP-A- 2010 120 397
- US-A1- 2010 004 090

## Description

### BACKGROUND OF THE INVENTION

### (Field of the Invention)

The present invention relates to an electric vehicle of a type utilizing in-wheel motors, particularly, to an arrangement of an inverter and others employed in the in-wheel motor driven electric vehicle.

### Description of Related Art

In the days ahead, propagation of in-wheel motor driven electric vehicles of a kind having wheels driven directly by electric motors is expected as an environmental friendly movable body. For this purpose, a method of wiring electric power lines for the in-wheel motors and the distribution of driving force to front and rear wheels in the case of the four wheel drive vehicle have been suggested. See, for example, the patent document 1 listed below so far as the power line wiring method is concerned and, also, the patent document 2 listed below so far as the driving force distribution is concerned. In any event, in those prior art patent documents, an inverter is disposed between driving wheels and proximate thereto.

Positioning of the inverter between the driving wheels facilitates the use of relatively short hard wiring and a short wiring layout between the inverter and each of the electric motors and, therefore, it is effective in reducing the vehicle weight to achieve a long distance travel that is most important to a battery driven vehicle. It has, however, been found that when the reduction in mass of the vehicle is pursued, it is necessary to optimize not only the wiring between the inverter and the motor, but also the relative position between a radiator and a battery.

The document WO 2008/031080 discloses the features of the preamble of claim 1.

### [Prior Art Literature]

[Patent Document 1] JP Laid-open Patent Publication No. 2008-213774
[Patent Document 2] JP Laid-open Patent Publication No. 2009-142036

### DISCLOSURE OF THE INVENTION

In order to increase the travel distance of the in-wheel motor drive electric vehicle that is exhibited per unitary electric power (the travel distance per unitary electric power being hereinafter referred to as "electric mileage"), reduction of the weight of the vehicle is of a primary importance. As is well known to those skilled in the art, the vehicle is made up of driving elements (such as, for example, tires, wheels, reduction gear units, motors, an inverter and a battery), drive accessories (such as a radiator and others), braking elements including brakes, steering elements including a steering, a body structure and windows. It is essential to reduce weight of those elements.

In view of the foregoing, the present invention has for its primary object to provide an in-wheel motor driven electric vehicle of a kind, in which the driving system in its entirety, with a central focus placed on the inverter, is reduced in weight and, particularly, in which the wiring and tubing around the inverter are reduced in length and the inverter is efficiently cooled to enable the weight reduction of the vehicle, the electric mileage can be increased and, also, a traveling stability can be obtained.

The in-wheel motor driven electric vehicle designed in accordance with the present invention is an in-wheel motor driven electric vehicle of a type having in-wheel motor driving wheels, each being a drive wheel that is driven by an in-wheel motor, which in-wheel motor driven motor is mounted respectively on opposite left and right sides of a vehicle body structure. The in-wheel motor driven electric vehicle includes a single inverter for supplying an alternating power to all in-wheel motors, which inverter is mounted on the vehicle body structure at a position intermediate between left and right in-wheel motor devices with respect to a bilateral direction; a battery mounted on the vehicle body structure; and a radiator for cooling the inverter, which radiator is arranged at a location forwardly of the inverter, and the inverter being disposed above the battery.

In a preferred embodiment of the present invention, a wiring extending between the inverter and each of the in-wheel motor devices may be drawn outwardly from one of opposite side surfaces of the inverter, which is closest to the in-wheel motor device with which such wiring is to be connected. A tubing extending between the inverter and the radiator for the flow of a coolant medium is connected with a front end of the inverter with respect to an anteroposterior direction of the vehicle body structure. Also, a wiring extending between the inverter and the battery is drawn outwardly from a rear end of the inverter with respect to an anteroposterior direction of the vehicle body structure.

According to the present invention, the inverter is disposed between the left and right in-wheel motor devices and above the battery, the wiring between the inverter and each of the in-wheel motor devices can be drawn outwardly from a side surfaces of the inverter closest to those in-wheel motor devices with which it is connected, and, therefore, the length of such wiring can be reduced. Because of the above, the mass of component parts used to support the wiring can be reduced. While the radiator is used for the heat exchange between a coolant for cooling the inverter and the atmosphere, positioning of the radiator at the location forwardly of the vehicle body structure allows the incoming wind to be efficiently utilized during the travel of the electric vehicle. Hence, compactization of the radiator and reduction of the weight of the radiator can be accomplished. Positioning of the radiator at the location forwardly of the inverter makes it possible to shorten the tubing to reduce the weight thereof and also to reduce the mass of the component parts associated with the tubing.

If the tubing for the cooling medium is connected at a front end of the inverter with respect to the anteroposterior direction of the vehicle body structure, the tubing can be further reduced in length and weight. Also, if the inverter occupies a position above the battery, the battery can be disposed at a lower portion of the electric vehicle and a traveling stability can be obtained. Since the battery has a large mass, it is desirable for the battery to be positioned at a lower intermediate portion of the electric vehicle when considering the traveling stability of the electric vehicle. With the present invention, however, the drive system as a whole, with central focus placed on the inverter, can be advantageously reduced in weight. In the electric vehicle, that the electric vehicle can be driven a long distance with a minimized battery pay load contributes to the protection of the global environment. Reducing the mass of the electric vehicle is indeed effective to increase the electric mileage.

If a wiring extending between the inverter and the battery is drawn outwardly from a rear end of the inverter with respect to an anteroposterior direction of the vehicle body structure, a work to connect the inverter and the battery with the wiring can be easily accomplished. Furthermore, not only a further reduction in length of the wiring but also the reduction of the mass of the component parts associated with such wiring can be achieved.

The in-wheel motor driven electric vehicle of the present invention may have the in-wheel motor driving wheels at respective locations forwardly and rearwardly of the vehicle body structure, respectively. In such case, the anteroposterior position of the inverter is preferably between the forward and rearward in-wheel motor driving wheels. Where the in-wheel motor driving wheels are disposed forwardly and rearwardly, positioning of the inverter at a location intermediate therebetween is effective to achieve an equalization in distance, over which the wiring extend, relative to each of the in-wheel motor driving wheel, thus advantageously reducing the length of the wiring.

In another preferred embodiment of the present invention, the electric vehicle of the present invention may have the in-wheel motor driving wheels at respective locations either forwardly or rearwardly of the vehicle body structure. In this case, the inverter has to be partly or in its entirety disposed at a position within a range in an anteroposterior direction where the in-wheel motor driving wheels exist. Positioning of the inverter at the position within the range in the anteroposterior direction where the in-wheel motor driving wheels exist is effective to reduce the length of the wiring. Also, the battery may be disposed at a location intermediate of an anteroposterior direction of the vehicle body structure.

In a further preferred embodiment of the present invention, although in any one of the previously described examples the inverter have been described as positioned above the battery mounted on the vehicle body structure, in place of this construction the inverter may be held at a forward position in an anteroposterior direction of the vehicle body structure relative to the battery mounted on the vehicle body structure. If the inverter and the battery are disposed forwardly and rearwardly relative to each other, both of the inverter and the battery, each having a large mass, can be disposed at a lower portion of the vehicle body structure. Depending on the structure of the electric vehicle, positioning of the inverter and the battery forwardly and rearwardly relative to each other this way is feasible in terms of the weight distribution. In such case, positioning of the inverter between the battery and the radiator is preferred so that the wiring between the inverter and the battery, the tubing between the inverter and the radiator and the wirings between the inverter and the in-wheel motor devices can be advantageously reduced in length.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a plan view showing an arrangement of component parts of an in-wheel motor driven electric vehicle according a first preferred embodiment of the present invention;
Fig. 2 is a plan view, with a portion cut out, showing one example of an inverter employed in the in-wheel motor drive electric vehicle;
Fig. 3 is a side view, with a portion cut out, showing one example of the inverter employed in the in-wheel motor driven electric vehicle;
Fig. 4 is a plan view showing an arrangement of the component parts of the in-wheel motor driven electric vehicle according a second preferred embodiment of the present invention;
Fig. 5 is a plan view showing an arrangement of the component parts of the in-wheel motor driven electric vehicle according a third preferred embodiment of the present invention;
Fig. 6 is a plan view showing an arrangement of the component parts of the in-wheel motor driven, electric vehicle according a fourth preferred embodiment of the present invention; and
Fig. 7 is a plan view showing an arrangement of the component parts of the in-wheel motor driven electric vehicle according a fifth preferred embodiment of the present invention.

### DESCRIPTION OF PREFERRED EMBODIMENTS

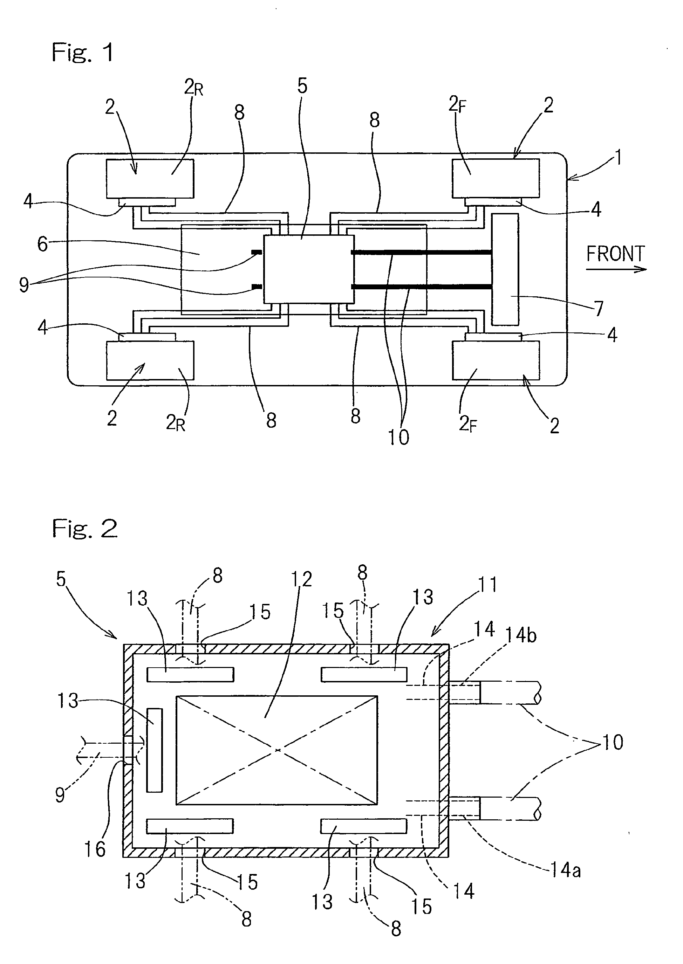

The details of a first preferred embodiment of the present invention will now be described with particular reference to Figs. 1 to 3. An in-wheel motor driven electric vehicle is an ordinary four-wheel automobile such as, for example, a passenger car and includes a vehicle body structure 1 having front left and right wheels 2_{F} and rear left and right wheels 2_{R}, all of those left and right wheels 2_{F} and 2_{R} being represented by respective in-wheel motor drive or driving wheels. In-wheel motor devices 4 for those four in-wheel motor driving wheels 2 are fed with alternating currents from a single inverter 5 so as to be electrically driven. It is to be noted that the term "vehicle body structure" herein referred to are to be understood as including a chassis and a body.

The inverter 5 referred to above is such that a position of the vehicle body structure 1 in a bilateral direction is disposed between left and right, in-wheel motor devices 4 and 4 and a position thereof in an anteroposterior direction is disposed between the front and rear wheels 2_{F} and 2_{R} which are front and rear in-wheel motor driving wheels 2, while having been spaced an equal distance from the four in-wheel motor devices 4. It is, however, to be noted that although the inverter 5 may not necessarily be spaced an equal distance from the four in-wheel motor devices 4, the equal distance is preferred. A battery identified by 6 is mounted on the vehicle body structure 1 and positioned at a lower intermediate portion of the vehicle body structure 1 with respect to the bilateral direction, with the inverter 5 positioned above the battery 6. A radiator 7 for cooling the inverter 5 is positioned at a front portion of the automotive vehicle structure 1, with the inverter 5 positioned rearwardly of the radiator 7.

A wiring 8 extending between the inverter 5 and each of the in-wheel motor devices 4 is drawn outwardly from a position on one of opposite side surfaces of the inverter 5, which is closest to the respective in-wheel motor device 4 that is connected with the inverter 5 through such wiring 8, and closer to the respective in-wheel motor device 4 than to an intermediate point with respect to the anteroposterior direction. Wirings 9 extending between the inverter 5 and the battery 6 may be drawn outwardly from a rear end face of the inverter 5 or from a rear surface area of a lower or upper surface. Tubes 10 fluid connecting between the inverter 5 and the radiator 7 are connected with a front end of the inverter 5 with respect to the anteroposterior direction of the electric vehicle, for example, a front end surface or a front end area of the upper or lower surface.

The inverter 5 is of a type which has an electric equipment system for driving the four in-wheel motor devices 4 independently, which is accommodated within a single casing, and which also has both of a function of converting an electric power from the battery 6 into an alternating current and a function of controlling outputs.

The inverter 5 includes, as shown in, for example, Fig. 2, a casing 11, a wiring substrate 12 accommodated within the casing 11 and having electric component parts mounted thereon, terminal bases 13 disposed within the casing 11, and cooling medium circulating passages 14 provided within the casing 11. The wiring substrate 12 and a terminal (not shown) of each of the terminal bases 13 are connected with each other by means of an internal wiring (not shown). Connecting ports 14a and 14b of the cooling medium circulating passages 14 on inflow and outflow sides, respectively, are provided at a front end of the casing 11.

The terminal bases 13 are provided one for each of the in-wheel motor devices 4 to be driven and are provided independent relative to the battery 6. The terminal base 13 for each of the in-wheel motor devices 4 is disposed within the casing 11 at a close anteroposterior position in the vicinity of a side face close to the associated in-wheel motor device 4, and an insertion hole 15 for the passage of the wiring therethrough is provided in a side plate portion of the casing 11 at a location in the vicinity of the associated terminal base 13. A terminal base 13 for connection with the battery 6 is provided within and at a rear portion of the casing 11, an insertion hole 16 for a wiring 9 is provided in a rear plate portion of the casing 11.

It is to be noted that each of the terminal bases 13 may be provided on an outer surface of the casing 11, having been exposed to the outside. Also, although the inverter 5 employed in the instance as shown and described is shown and described as driving the four wheels, the wiring substrate 12, having the electric component parts mounted thereon, and the terminal bases 13 may be each employed in a number corresponding to the number of motor drives particularly where the inverter 5 is of a design for use in driving two wheels.

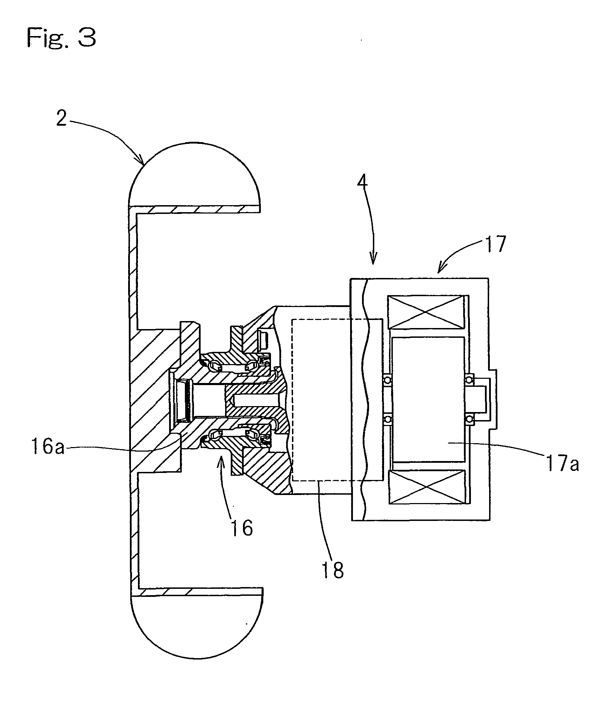

Fig. 3 illustrates one example of each of the in-wheel motor device 4. As shown therein, the in-wheel motor device 4 is a device for rotationally driving the associated drive wheel 2 by means of a motor, a part or the entirety of which is accommodated within such drive wheel 2. In the embodiment shown in and now described, each of the in-wheel motor drive device 4 is of a design, in which a single assembled component, including a wheel support bearing assembly 16 for rotatably supporting the drive wheel 2, an electric motor 17 and a reduction gear unit 18 for reducing and transmitting a rotation of a rotor 17a of the electric motor 17 to a rotational raceway ring 16a of the wheel support bearing assembly 16 on a rotatable side, is removably mounted on the vehicle body structure 1. The rotational raceway ring 16a of the wheel support bearing assembly 16 concurrently serves as a wheel hub. The respective in-wheel motor device 4 referred to above is available in various types and may be of any of a type provided separately from the wheel support bearing assembly 16, a type not provided with the reduction unit 18 and a type including a motor that is, in its entirety, accommodated within the wheel.

According to the in-wheel motor driven electric vehicle of the structure hereinabove described, the inverter 5 is disposed between the left and right in-wheel motor devices 4 and at a location rearwardly of the radiator 7 and above the battery 6, the inverter 5 and the in-wheel motor devices 4 are connected with each other by means of the wirings drawn outwardly of the inverter 5 from the side surfaces of the latter closest to those in-wheel motor devices 4, the inverter 5 and the battery 6 is connected with each other by means of the wiring drawn outwardly from the inverter at a location rearwardly of the vehicle body structure, and the inverter 5 and the radiator 7 are fluid connected with each other by means of the tubes extending along the anteroposterior direction of the vehicle body structure. Accordingly, not only the length of each of the wirings 8 and 9 and that of each of the tubes 10 can be reduced to an optimum value, but also the mass of component parts associated with the wirings and the tubes can be reduced. Therefore, the vehicle as a whole is reduced in weight and the electric mileage is increased. The feature that the electric vehicle can be driven a long distance with a minimized battery pay load contributes to the protection of the global environment. Reducing the mass of the electric vehicle is indeed effective to increase the electric mileage.

Since the radiator is used for heat exchange between a coolant for cooling the inverter and the atmosphere, it is desirable for the radiator 7 to be disposed at such a location forwardly of the vehicle body structure that the incoming wind can be efficiently taken in during the travel of the vehicle. On the other hand, since the battery 6 has a large mass, it is desirable to disposed it at a lower intermediate portion of the vehicle body structure particularly where the vehicle travelling stability is desired to be secured. It is, however, to be noted that in consideration of the weight distribution in the vehicle, the battery 6 and the inverter 5 may be arranged forwards and rearwards, and vice versa, relative to each other such as shown in and described in connection with the foregoing embodiment of the present invention.

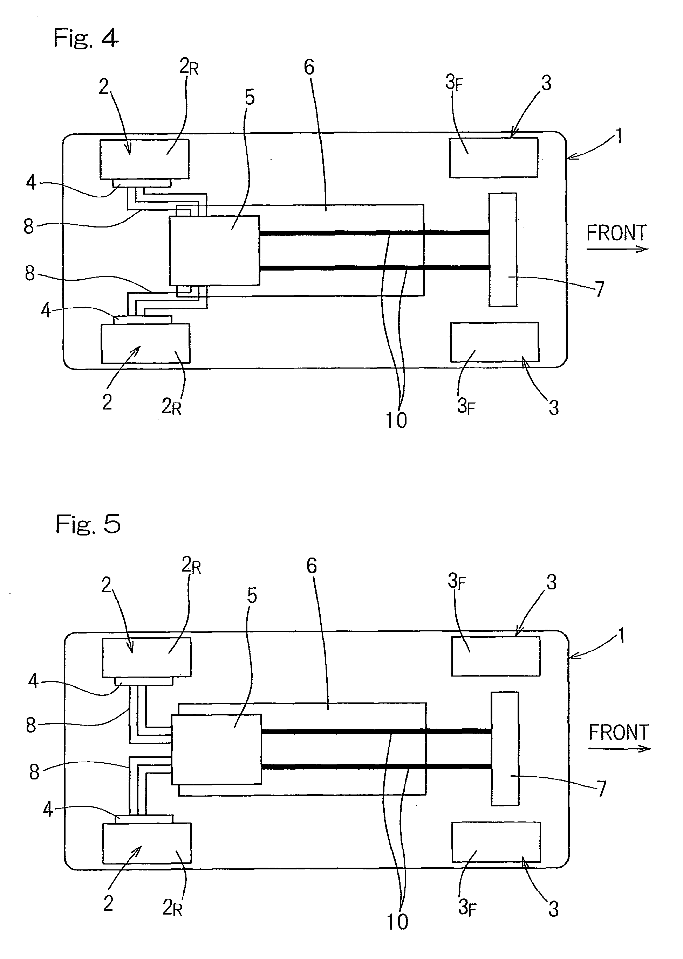

Although in describing the foregoing embodiment of the present invention, the four wheels have been shown and described as the in-wheel motor driving wheels 2, the number of the driven wheels may not necessarily be limited to four such as shown and described, but the present invention serves the purpose if at least two of the four wheels of the electric vehicle are in-wheel motor driving wheels. By way of example, as shown in Figs. 4 and 5 showing second and third preferred embodiments of the present invention, respectively, the left and right rear wheels 2_{R} are rendered to be the in-wheel motor driving wheels 2 with the front wheels 3_{F} used as driven wheels 3. In the practice of each of the second and third embodiments shown respectively in Figs. 4 and 5, the battery 6 is disposed at a lower intermediate portion of the vehicle body structure 1 with respect to the anteroposterior and bilateral directions. The inverter 5 is used to drive the two in-wheel motor devices 4 and is disposed above a rear end area of the battery 6. By so doing, the inverter 5 is positioned at a portion within the anteroposterior range in which the in-wheel motor driving wheels 2 exist.

It is, however, to be noted in the second embodiment shown in Fig. 4, the wirings 8 extending between the inverter 5 and each of the in-wheel motor devices 4 are drawn outwardly from one of the opposite side surfaces of the inverter 5, which is closest to the respective in-wheel motor device 4. In the third embodiment shown in Fig.5, the wirings 8 extending between the inverter 5 and each of the in-wheel motor devices 4 are drawn outwardly from a rear surface of the inverter 5. The wirings 9 connecting between the inverter 5 and the battery 6 may be drawn outwardly from a rear or front surface of the inverter 5, a front or rear end of the inverter 5, or from side surface or from an upper or lower surface.

In the case of the electric vehicle having only the rear wheels 2 driven by the in-wheel motor devices 4 such as shown in Figs. 4 and 5 in connection with the respective second and third embodiments of the present invention, positioning of the inverter 5 between the rear wheels 2_{R} is effective in reducing the length of the wirings 8, which in turn reduces the weight of the electric vehicle, thus contributing to an effective increase of the electric mileage.

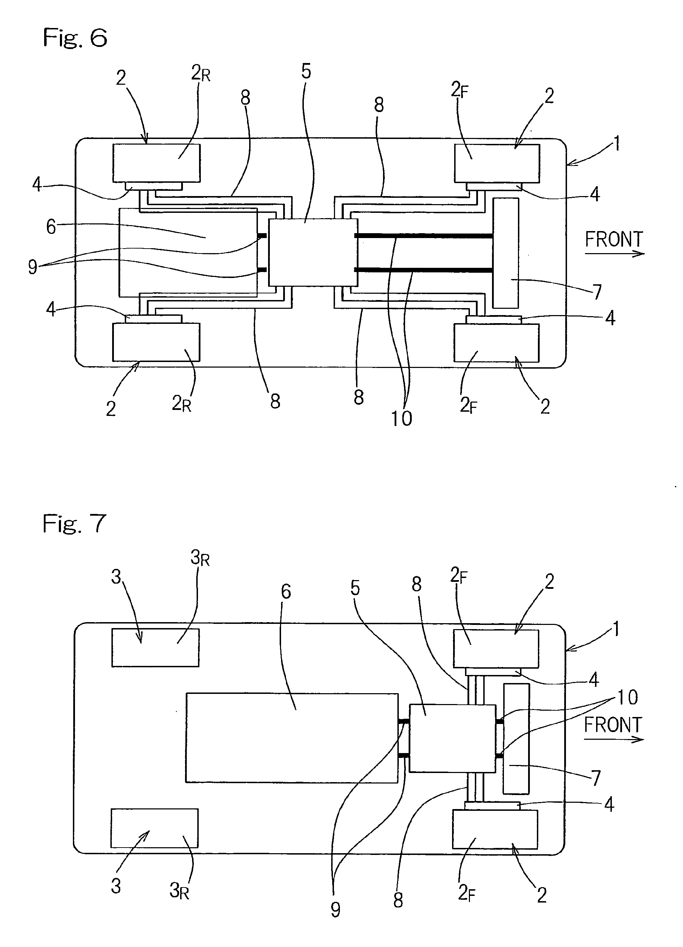

Fig. 6 illustrates a fourth preferred embodiment of the present invention. In this fourth embodiment, the left and right front wheels 2_{F} and the left and right rear wheels 2_{R} are employed in the form of the respective in-wheel motor driving wheels 2, but the inverter 5 and the battery 6 are positioned forwards and rearwards relative to the vehicle body structure 1 and disposed in a lower portion of the latter. In this case, the inverter 5 is disposed at an intermediate location with respect to the anteroposterior direction of the vehicle body structure 1 and the battery 6 is positioned rearwardly of the inverter 6 and is disposed at a rear portion of the vehicle body structure 1.

As hereinabove described, it may occur that positioning of the battery 6 and the inverter 5 forwardly and rearwardly relative to each other is preferred in terms of the weight balance of the electric vehicle as a whole. In such case, for the four wheel drive vehicle such as shown in Fig. 6 according to the fourth embodiment, disposing the inverter 5 at a location intermediate of the anteroposterior direction of the vehicle body structure 1 the battery 6 at a location rearwardly of the inverter 5 is preferred in reducing the weight of the electric vehicle brought about by the reduction in length of the wirings 9.

A fifth preferred embodiment of the present invention is shown in Fig. 7. The fifth embodiment shown in Fig. 7 is an example in which the two, left and right front wheels 2_{F} are used analog-to-digital the in-wheel motor driving wheels 2 and the two, left and right rear wheels 3_{R} are used as the driven wheels 3. In this example, the battery 6 is disposed at a position intermediate of the bilateral direction of the vehicle body structure 1 and the inverter 5 is disposed between the left and right in-wheel motor driven wheel. This arrangement is preferable in that the lengths of the wirings 8 can be reduced to reduce the weight of the electric.

It is to be noted that any of the second to fifth embodiments shown in and described with reference to Figs. 4 to 7, respectively, is similar to the first embodiment of the present invention unless otherwise specified.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1 ····: Vehicle body structure
- 2 ····: In-wheel motor driving wheel
- 2_{F} ····: Front wheel
- 2_{R} ····: Rear wheel
- 3 ....: Driven wheel
- 4 ....: In-wheel motor device
- 5 ····: Inverter
- 6 ····: Battery
- 7 ····: Radiator
- 8, 9 ····: Wiring
- 10 ····: Tube

## Claims

1. An in-wheel motor driven electric vehicle which comprises:
a vehicle body structure (1) having at least two left and right in-wheel motor driving wheels (2_{F}; 2_{R}) mounted respectively on opposite left and right sides thereof, each of the in-wheel motor driving wheels (2_{F}; 2_{R}) being a drive wheel (2) that is driven by an in-wheel motor device (4);
a single inverter (5) for supplying an alternating power to all in-wheel motor devices (4), which inverter (5) is mounted on the vehicle body structure (1) at a position intermediate between the left and right in-wheel motor devices (4) with respect to a bilateral direction;
a battery (6) mounted on the vehicle body structure (1); and
a radiator (7) for cooling the inverter (5), which radiator (7) is arranged at a location forwardly of the inverter (5),
**characterized in that**
the inverter (5) is disposed above the battery (6) and
a wiring (8) extending between the inverter (5) and each of the in-wheel motor devices (4) is drawn outwardly from one of opposite side surfaces of the inverter (5), which is closest to the in-wheel motor device (4) with which such wiring (8) is to be connected, a wiring (9) extending between the inverter (5) and the battery (6) is drawn outwardly from a rear end of the inverter (5) with respect to an anteroposterior direction of the vehicle body structure (1) and a tubing (10) extending between the inverter (5) and the radiator (7) for the flow of a coolant medium is connected with a front end of the inverter (5) with respect to an anteroposterior direction of the vehicle body structure (1).

2. The in-wheel motor driven electric vehicle as claimed in claim 1, in which the electric vehicle has the in-wheel motor driving wheels (2_{F}, 2_{R}) at respective locations forwardly and rearwardly of the vehicle body structure (1), respectively, and the inverter (5) is disposed at a position in an anteroposterior direction, which is intermediate between the forward and rearward in-wheel motor driving wheels (2_{F}, 2_{R}).

3. The in-wheel motor driven electric vehicle as claimed in claim 1, in which the electric vehicle has the in-wheel motor driving wheels (2_{F}; 2_{R}) at respective locations either forwardly or rearwardly of the vehicle body structure (1) and the inverter (5) is partly or in its entirety disposed at a position within a range in an anteroposterior direction where the in-wheel motor driving wheels (2_{F}; 2_{R}) exist.

4. The in-wheel motor driven electric vehicle as claimed in claim 1, in which the battery (6) is disposed at a location intermediate of an anteroposterior direction of the vehicle body structure (1).

5. The in-wheel motor driven electric vehicle as claimed in claim 1, in which in place of the placement of the inverter (5) above the battery (6) mounted on the vehicle body structure, the inverter (5) is held at a forward position in an anteroposterior direction of the vehicle body structure (1) relative to the battery (6) mounted on the vehicle body structure (1).

## Patentansprüche

1. Elektrofahrzeug mit Radnabenmotor, das Folgendes umfasst:
eine Fahrzeugkarosseriestruktur (1) mit mindestens zwei linken und rechten Antriebsrädern (2_{F}; 2_{R}) mit Radnabenmotor, die jeweils auf entgegengesetzten linken und rechten Seiten der Fahrzeugkarosserie montiert sind, wobei jedes der Antriebsräder (2_{F}; 2_{R}) mit Radnabenmotor ein Antriebsrad (2) ist, das durch einen Radnabenmotor (4) angetrieben wird;
einen einzigen Wechselrichter (5) zum Zuführen von Wechselstrom zu allen Radnabenmotoren (4), wobei der Wechselrichter (5) an einer Position zwischen dem linken und dem rechten Radnabenmotor (4) in Bezug auf eine bilaterale Richtung an der Fahrzeugkarosseriestruktur (1) montiert ist;
eine Batterie (6), die an der Fahrzeugkarosseriestruktur (1) montiert ist; und
einen Kühler (7) zum Kühlen des Wechselrichters (5), wobei der Kühler (7) an einer Stelle vor dem Wechselrichter (5) angeordnet ist,
**dadurch gekennzeichnet, dass**
der Wechselrichter (5) über der Batterie (6) angeordnet ist, und
eine sich zwischen dem Wechselrichter (5) und jedem der Radnabenmotoren (4) erstreckende Verkabelung (8) aus einer der entgegengesetzten Seitenflächen des Wechselrichters (5) herausgezogen ist, die dem Radnabenmotor (4) am nächsten liegt, mit dem diese Verkabelung (8) zu verbinden ist, eine sich zwischen dem Wechselrichter (5) und der Batterie (6) erstreckende Verkabelung (9) aus einem in Bezug auf eine anteroposteriore Richtung der Fahrzeugkarosseriestruktur (1) rückwärtigen Ende des Wechselrichters (5) herausgezogen ist, und ein sich zwischen dem Wechselrichter (5) und dem Kühler (7) erstreckender Schlauch (10) für den Strom eines Kühlmittels mit einem in Bezug auf eine anteroposteriore Richtung der Fahrzeugkarosseriestruktur (1) vorderen Ende des Wechselrichters (5) verbunden ist.

2. Elektrofahrzeug mit Radnabenmotor nach Anspruch 1, bei dem das Elektrofahrzeug die Antriebsräder (2_{F}; 2_{R}) mit Radnabenmotor jeweils an einer Stelle vor bzw. hinter der Fahrzeugkarosseriestruktur (1) besitzt und der Wechselrichter (5) an einer Position in einer anteroposterioren Richtung angeordnet ist, die zwischen den vorderen und hinteren Antriebsrädern (2_{F}; 2_{R}) mit Radnabenmotor liegt.

3. Elektrofahrzeug mit Radnabenmotor nach Anspruch 1, bei dem das Elektrofahrzeug die Antriebsräder (2_{F}; 2_{R}) jeweils an einer Stelle vor bzw. hinter der Fahrzeugkarosseriestruktur (1) besitzt und der Wechselrichter (5) ganz oder teilweise an einer Position innerhalb eines Bereichs in einer anteroposterioren Richtung angeordnet ist, wo die Antriebsräder (2_{F}; 2_{R}) mit Radnabenmotor vorhanden sind.

4. Elektrofahrzeug mit Radnabenmotor nach Anspruch 1, bei dem die Batterie (6) an einer Stelle in der Mitte einer anteroposterioren Richtung der Fahrzeugkarosseriestruktur (1) angeordnet ist.

5. Elektrofahrzeug mit Radnabenmotor nach Anspruch 1, bei dem anstelle der Platzierung des Wechselrichters (5) über der an der Fahrzeugkarosseriestruktur montierten Batterie (6) der Wechselrichter (5) an einer vorderen Position in einer anteroposterioren Richtung der Fahrzeugkarosseriestruktur (1) in Bezug auf die an der Fahrzeugkarosseriestruktur (1) montierte Batterie (6) gehalten wird.

## Revendications

1. Véhicule électrique entraîné par un moteur dans la roue qui comprend:
une structure de caisse de véhicule (1) comportant au moins deux roues motrices gauche et droite à moteur dans la roue (2_{F} ; 2_{R}) montées respectivement sur les côtés gauche et droit opposés de celle-ci, chacune des roues motrices à moteur dans la roue (2_{F} ; 2_{R}) étant une roue motrice (2) qui est entraînée par un dispositif de moteur dans la roue (4) ;
un onduleur (5) unique pour fournir une puissance alternative à tous les dispositifs de moteur dans la roue (4), lequel onduleur (5) est monté sur la structure de caisse de véhicule (1) à une position intermédiaire entre les dispositifs de moteur dans la roue gauche et droit (4) par rapport à une direction bilatérale ;
une batterie (6) montée sur la structure de caisse de véhicule (1) ; et
un radiateur (7) pour refroidir l'onduleur (5), lequel radiateur (7) est agencé à un emplacement à l'avant de l'onduleur (5),
**caractérisé en ce que**
l'onduleur (5) est disposé au-dessus de la batterie (6), et
un câblage (8) s'étendant entre l'onduleur (5) et chacun des dispositifs de moteur dans la roue (4) est tiré à l'extérieur à partir de l'une des surfaces latérales opposées de l'onduleur (5), qui est la plus proche du dispositif de moteur dans la roue (4) auquel ce câblage (8) doit être connecté, un câblage (9) s'étendant entre l'onduleur (5) et la batterie (6) est tiré à l'extérieur à partir d'une extrémité arrière de l'onduleur (5) par rapport à une direction antéro-postérieure de la structure de caisse de véhicule (1) et un tube (10) s'étendant entre l'onduleur (5) et le radiateur (7) pour l'écoulement d'un réfrigérant est relié à une extrémité avant de l'onduleur (5) par rapport à une direction antéro-postérieure de la structure de caisse de véhicule (1).

2. Véhicule électrique entraîné par un moteur dans la roue selon la revendication 1, dans lequel le véhicule électrique a les roues motrices à moteur dans la roue (2_{F}, 2_{R}) à des emplacements respectifs à l'avant et à l'arrière de la structure de caisse de véhicule (1), respectivement, et l'onduleur (5) est disposé à une position dans une direction antéro-postérieure, qui est intermédiaire entre les roues motrices à moteur dans la roue (2_{F}, 2_{R}) à l'avant et à l'arrière.

3. Véhicule électrique entraîné par un moteur dans la roue selon la revendication 1, dans lequel le véhicule électrique a les roues motrices à moteur dans la roue (2_{F} ; 2_{R}) à des emplacements respectifs soit à l'avant, soit à l'arrière de la structure de caisse de véhicule (1) et l'onduleur (5) est disposé partiellement ou intégralement à une position dans une plage dans une direction antéro-postérieure dans laquelle les roues motrices à moteur dans la roue (2_{F} ; 2_{R}) sont présentes.

4. Véhicule électrique entraîné par un moteur dans la roue selon la revendication 1, dans lequel la batterie (6) est disposée à un emplacement intermédiaire dans une direction antéro-postérieure de la structure de caisse de véhicule (1).

5. Véhicule électrique entraîné par un moteur dans la roue selon la revendication 1, dans lequel, au lieu de placer l'onduleur (5) au-dessus de la batterie (6) montée sur la structure de caisse de véhicule, l'onduleur (5) est maintenu à une position à l'avant dans une direction antéro-postérieure de la structure de caisse de véhicule (1) par rapport à la batterie (6) montée sur la structure de caisse de véhicule (1).
